# EUROPÄISCHE PATENTANMELDUNG

(11) **EP 4 461 676 A1**
(43) Veröffentlichungstag der Anmeldung: **13.11.2024**
(21) Anmeldenummer: 24175126.2
(22) Anmeldetag: 10.05.2024
(51) Int. Cl.: B65G 25/02, B23Q 7/00, B27C 5/00, B27M 1/08, B65G 25/04

(54) **FÖRDEREINRICHTUNG**

(30) Priorität: 11.05.2023 DE 102023112439
(71) Anmelder: Homag Bohrsysteme GmbH, 33442 Herzebrock-Clarholz (DE)
(72) Erfinder: ULBRICH, Jens, 59320 Ennigerloh (DE); GERTZEN, Oliver, 33332 Gütersloh (DE); AUSTERMEIER, Martin, 33397 Rietberg (DE)
(74) Vertreter: Hoffmann Eitle

(57) **Zusammenfassung**

Fördereinrichtung, umfassend
einen Führungsträger (100, 100a, 100b), der sich in einer Längsrichtung erstreckt,
eine Halteanordnung (X1, X1b), die entlang des Führungsträgers (100, 100a, 100b) bewegbar ist und ein Halteelement (20, 20a, 20b; 40, 40a, 40b) aufweist, wobei das Halteelement (20, 20a, 20b; 40, 40a, 40b) zwischen einer Grundstellung und einer Arbeitsstellung bewegbar ist, und
eine weitere Halteanordnung (X2, X2b), die entlang des Führungsträgers (100, 100a, 100b) bewegbar ist und ein weiteres Halteelement (60, 60a, 60b; 80, 80a, 80b) aufweist,
wobei die Grundstellung derart ist, dass die Halteanordnung (X1, X1b) und die weitere Halteanordnung (X2, X2b) entlang des Führungsträgers (100, 100a, 100b) relativ aneinander vorbei bewegbar sind.

## Beschreibung

### Technisches Gebiet

Die Erfindung betrifft eine Fördereinrichtung, insbesondere für plattenförmige Werkstücke, sowie ein Verfahren zum Fördern zumindest eines, insbesondere plattenförmigen, Werkstücks. Beispielsweise kann es sich bei einem solchen Werkstück um ein Werkstück aus Holz, einem Holzwerkstoff, aus Metall, oder eine Gipsplatte, eine Faserplatte, einen Karton, eine Mineralplatte, eine Silikatplatte, oder eine Verbundplatte aus den aufgeführten Materialien handeln. Ferner betrifft die Erfindung eine Bearbeitungsmaschine mit einer solchen Fördereinrichtung sowie ein Verfahren.

### Stand der Technik

Im Stand der Technik sind Fördereinrichtungen bekannt, mit denen plattenförmige Werkstücke in eine Bearbeitungsmaschine oder zu einer Bearbeitungsstation bewegt werden, und nach Ende einer bestimmten Bearbeitungsoperation ein Weitertransport des entsprechenden Werkstücks erfolgt.

Beispielsweise beschreibt die EP 2 168 714 A1 eine kombinierte Förder- und Bearbeitungseinrichtung für plattenförmige Werkstücke, die einen Längsträger aufweist, welcher Längsträger zumindest ein erstes Führungselement und ein zweites Führungselement umfasst. Im ersten Führungselement ist ein erstes Förderelement mit Spannelementen angebracht, und beim zweiten Führungselement ein zweites Förderelement mit Spannelementen. Jedes der Förderelemente ist eingerichtet, unabhängig vom anderen Förderelement in jede Position des jeweiligen Führungselements zu verfahren.

### Darstellung der Erfindung

Der Erfindung liegt die Aufgabe zugrunde, eine Fördereinrichtung bereitzustellen, die bei präziser Bearbeitung eine hohe Taktleistung bereitstellt. Ferner besteht die Anforderung nach einem entsprechenden Verfahren.

Anspruch 1 stellt eine entsprechende Fördereinrichtung bereit. Weitere bevorzugte Ausführungsformen werden in den abhängigen Ansprüchen sowie nachfolgend beschrieben.

Insbesondere wird eine Fördereinrichtung bereitgestellt, die aufweist: einen Führungsträger, der sich in einer Längsrichtung erstreckt, eine Halteanordnung, die entlang des Führungsträgers bewegbar ist und ein Halteelement aufweist, wobei das Halteelement zwischen einer Grundstellung und einer Arbeitsstellung bewegbar ist, eine weitere Halteanordnung, die entlang des Führungsträgers bewegbar ist und ein weiteres Halteelement aufweist. Die Grundstellung des Halteelements ist dabei derart, dass die Halteanordnung und die weitere Halteanordnung entlang des Führungsträgers relativ aneinander vorbei bewegbar sind.

Dabei können die Halteanordnung und die weitere Halteanordnung derart entlang des Führungsträgers relativ aneinander vorbei bewegt werden, dass die Halteanordnung, die weitere Halteanordnung, oder die Halteanordnung und die weitere Halteanordnung bewegt werden.

Durch eine mögliche Überlagerung der Arbeitsbewegung und Rückfahrbewegung der Halteanordnung und der weiteren Halteanordnung kann die Taktleistung erhöht werden und es ergeben sich weitere Vorteile dadurch, dass die Halteanordnung und die weitere Halteanordnung im Werkstückzugriff sein können. Das bedeutet, dass zeitweise zwei oder mehr Werkstücke gleichzeitig bearbeitet werden können, während sich diese im Bearbeitungsbereich einer Maschine befinden.

Die Halteanordnung und die weitere Halteanordnung können unabhängig voneinander verfahrbar sein. Durch den Einsatz von zwei unabhängig verfahrbaren Halteanordnungen kann eine Pendelbewegung realisiert werden. Die Halteanordnungen können dabei aneinander vorbeifahren.

Es ist zudem möglich, die Programmierstruktur der Werkstücke auf das Arbeitsfeld (Koordinatensystem) einer Bearbeitungsmaschine zu übertragen. Insbesondere kann durch die Anordnung des Halteelements in der Arbeitsstellung ein Werkstück in einer Arbeitsebene gehalten werden.

Es ist bevorzugt, dass das weitere Halteelement der weiteren Halteanordnung zwischen einer Grundstellung und einer Arbeitsstellung bewegbar ist. So kann beispielsweise das Halteelement in die Grundstellung (des Halteelements) und das weitere Halteelement in die Arbeitsstellung (des weiteren Halteelements) bewegt werden. Daraufhin können die Halteanordnung und die weitere Halteanordnung entlang des Führungsträgers relativ aneinander vorbei bewegt werden.

Gemäß einer bevorzugten Ausführungsform weist die Halteanordnung ein erstes Halteelement und ein zweites Halteelement, und/oder die weitere Halteanordnung ein drittes Halteelement und ein viertes Halteelement auf. Auch können weitere Halteelemente vorgesehen sein. Mit den paarweise vorgesehenen Halteelementen können größer dimensionierte Werkstücke gehalten und entsprechend bewegt werden. Dadurch, dass die Werkstücke an Randbereichen gehalten werden, können über einen relativ großen Bereich Bearbeitungsoperationen durchgeführt werden.

Die Halteelemente können jeweils eine erste Greifeinheit sowie eine zweite Greifeinheit aufweisen, wobei die erste Greifeinheit in vertikaler Richtung relativ zur zweiten Greifeinheit bewegt werden kann, und/oder die zweite Greifeinheit in vertikaler Richtung relativ zur ersten Greifeinheit bewegbar ist. Somit kann ein Werkstück zangenartig geklemmt und sicher gehalten werden.

In diesem Zusammenhang kann die zweite Greifeinheit in vertikaler Richtung relativ zur ersten Greifeinheit bewegbar sein (Hub beispielsweise 5mm). Dabei kann es sich um einen Freistellhub handeln, insbesondere eine Absenkung der Greifeinheit unterhalb der Arbeitsebene, um ein Umsetzen oder Umgreifen des Werkstücks zu ermöglichen.

Es ist bevorzugt, dass mit der zweiten Greifeinheit eine Arbeitsebene definiert wird. Dabei ist es vorteilhaft, wenn die erste Greifeinheit zum Halten eines Werkstücks bewegbar ist, wohingegen die zweite Greifeinheit zum Halten des Werkstücks gehalten wird. Beispielsweise kann anhand einer (oberen) Seite der zweiten Greifeinheit eine Arbeitsebene definiert werden.

Gemäß einer weiteren Ausführungsform der Fördereinrichtung sind das Halteelement und das weitere Halteelement in einer Arbeitsstellung derart angeordnet, dass ein Werkstück in einer Arbeitsebene gehalten werden kann. Somit können sich Bearbeitungsaggregate an der gemeinsamen Arbeitsebene orientieren. Dies erleichtert die Programmierung und Steuerung eines Bearbeitungsaggregats deutlich.

Das Halteelement und/oder das weitere Halteelement kann/können in einer vertikalen Richtung zwischen der Grundstellung und der Arbeitsstellung bewegt werden.

Gemäß einer anderen Ausführungsform ist/sind das Halteelement und/oder das weitere Halteelement in einer vertikalen Richtung zwischen der Grundstellung und der Arbeitsstellung bewegbar. Befindet sich eines der Halteelemente in einer Grundstellung und das andere Halteelement in einer Arbeitsstellung, können die Halteanordnungen relativ aneinander vorbei bewegt werden.

Gemäß einer weiteren Ausführungsform sind das Halteelement und/oder das weitere Halteelement zwischen der Grundstellung und der Arbeitsstellung schwenkbar. Befindet sich damit eines der Halteelemente in einer Grundstellung und das andere Halteelement in einer Arbeitsstellung, können die Halteanordnungen relativ aneinander vorbei bewegt werden.

Gemäß einer Modifikation können die Bewegung in einer vertikalen Richtung und die Schwenkbewegung auch miteinander kombiniert werden.

Es ist bevorzugt, dass der Führungsträger ein erstes Führungselement, insbesondere an einer in vertikaler Richtung oberen Seite, und ein weiteres Führungselement, insbesondere an einer in vertikaler Richtung unteren Seite oder in horizontaler Richtung seitlichen Seite, aufweist. Entsprechend können die Halteanordnung und die weitere Halteanordnung entlang des Führungsträgers relativ aneinander vorbei bewegt werden, wobei die Führung äußerst präzise möglich ist.

Es ist bevorzugt, dass das Halteelement und/oder das weitere Halteelement pneumatisch oder motorisch zwischen einer Grundstellung und einer Arbeitsstellung bewegbar ist/sind. Hierzu können Ausstellvorrichtungen mit dem Halteelement und/oder dem weiteren Halteelement mitbewegt werden.

Gemäß einem weiteren Aspekt wird eine Bearbeitungsmaschine bereitgestellt, umfassend eine Beschickungsstation, eine Bearbeitungsstation, eine Ausförderstation sowie eine Fördereinrichtung gemäß einem der vorangegangenen Punkte oder Modifikationen hiervon. Der Führungsträger erstreckt sich hierbei zwischen der Beschickungsstation, der Bearbeitungsstation und/oder der Ausförderstation.

Ferner kann es vorgesehen sein, dass sich der Führungsträger über die Beschickungsstation und der Ausförderstation hinaus erstreckt.

Die Bearbeitungsmaschine kann ferner eine Ausförderstation umfassen. Sobald eine Halteanordnung das Werkstück an der Ausförderstation freigibt, können die Halteelemente dieser Halteanordnung von der Arbeitsstellung in die Grundstellung bewegt werden, sodass die Halteanordnung entlang des Führungsträgers zur Beschickungsstation bewegt werden kann und dabei die jeweils andere Halteanordnung passiert. Der Führungsträger kann sich auch weitergehend über eine Ausförderstation hinaus erstrecken.

Wird die Fördereinrichtung bei einer Bearbeitungsmaschine eingesetzt, so kann eine Optimierung der Bearbeitungsprozesse aller im Arbeitsfeld befindlichen Werkstückbearbeitungen unter Berücksichtigung von gleichzeitigem Eingriff mehrerer Aggregate an mehreren Werkstücken erzielt werden. Hierbei müssen sich nicht alle Werkstücke vollständig im Bearbeitungsbereich befinden.

Es können die im Bearbeitungsbereich befindlichen durchzuführenden Werkstückbearbeitungen berücksichtigt werden. Somit kann die Bearbeitung mit einem oder mehreren oberen und unteren Bearbeitungsaggregaten, oder auch mit einem oder mehreren seitlichen Bearbeitungsaggregaten, unabhängig vom Werkstückbezug erfolgen.

Bezüglich der Vorteile der Bearbeitungsmaschine wird ergänzend auf die vorangegangenen Erläuterungen verwiesen.

Gemäß einem weiteren Aspekt wird ein Verfahren zum Fördern eines, insbesondere plattenförmigen, Werkstücks mit einer Fördereinrichtung bereitgestellt. Die Fördereinrichtung umfasst einen Führungsträger, der sich in einer Längsrichtung erstreckt, eine Halteanordnung, die entlang des Führungsträgers bewegbar ist und ein Halteelement aufweist, sowie eine weitere Halteanordnung aufweist, die entlang des Führungsträgers bewegbar ist und ein weiteres Halteelement aufweist. Im Rahmen des Verfahrens wird das Halteelement von einer Arbeitsstellung in eine Grundstellung bewegt, und die Halteanordnung und die weitere Halteanordnung werden nachfolgend entlang des Führungsträgers (100, 100a) relativ aneinander vorbei bewegt.

Es ist bevorzugt, dass auch das weitere Halteelement zwischen einer Grundstellung und einer Arbeitsstellung bewegt wird. So kann beispielsweise das Halteelement in eine Grundstellung und das weitere Halteelement in eine Arbeitsstellung bewegt werden. Daraufhin können die Halteanordnung und die weitere Halteanordnung entlang des Führungsträgers relativ aneinander vorbei bewegt werden.

Es ist ferner bevorzugt, dass das Halteelement und/oder das weitere Halteelement in einer vertikalen Richtung zwischen der Grundstellung und der Arbeitsstellung bewegt werden, oder das Halteelement und/oder das weitere Halteelement zwischen der Grundstellung und der Arbeitsstellung geschwenkt werden. Befindet sich damit eines der Halteelemente in einer Grundstellung und das andere Halteelement in einer Arbeitsstellung, können die Halteanordnungen relativ aneinander vorbei bewegt werden.

Gemäß einer Modifikation können die Bewegung in einer vertikalen Richtung und die Schwenkbewegung auch miteinander kombiniert werden.

Gemäß einer Ausführungsform wird das Werkstück zwischen einer Beschickungsstation und einer Bearbeitungsstation bewegt. In der Bearbeitungsstation können ein oder mehrere Bearbeitungsoperationen ausgeführt werden. Ferner kann eine Ausförderstation vorgesehen sein, oder die Beschickungsstation ist als kombinierte Beschickungs- und/Ausförderstation ausgebildet.

Im Rahmen des Verfahrens kann eine Fördereinrichtung oder eine Bearbeitungsmaschine gemäß einem der vorangegangenen Aspekte verwendet werden.

Bezüglich der Vorteile des Verfahrens wird auf die vorangegangenen Erläuterungen zur Fördereinrichtung und zur Bearbeitungsmaschine verwiesen.

### Kurze Beschreibung der Zeichnungen

Weitere Merkmale und Vorteile der Erfindung ergeben sich aus der nachfolgenden Beschreibung von Ausführungsformen unter Bezugnahme auf die beiliegenden Zeichnungen.
- Fig. 1: zeigt eine perspektivische Ansicht einer ersten Ausführungsform gemäß der Erfindung.
- Fig. 2: zeigt eine Seitenansicht der in Fig. 1 dargestellten ersten Ausführungsform.
- Fig. 3: zeigt eine schematische Draufsicht auf eine Bearbeitungsmaschine mit einer Fördereinrichtung gemäß der ersten Ausführungsform.
- Fig. 4: ist eine Seitenansicht einer zweiten Ausführungsform gemäß der Erfindung.
- Fig. 5: ist eine Seitenansicht der zweiten Ausführungsform, wobei die Arbeitsstellung und Grundstellung der Halteelemente gegenüber der Darstellung von Fig. 4 geändert ist.
- Fig. 6: zeigt eine perspektivische Ansicht einer dritten Ausführungsform gemäß der Erfindung.

### Beschreibung von Ausführungsformen

Anhand der beigefügten Figuren sollen bevorzugte Ausführungsformen beschrieben werden. Einzelmerkmale der jeweiligen Ausführungsformen können mit einer anderen Ausführungsform oder einer Modifikation hiervon kombiniert werden, um weitere Ausführungsformen auszubilden.

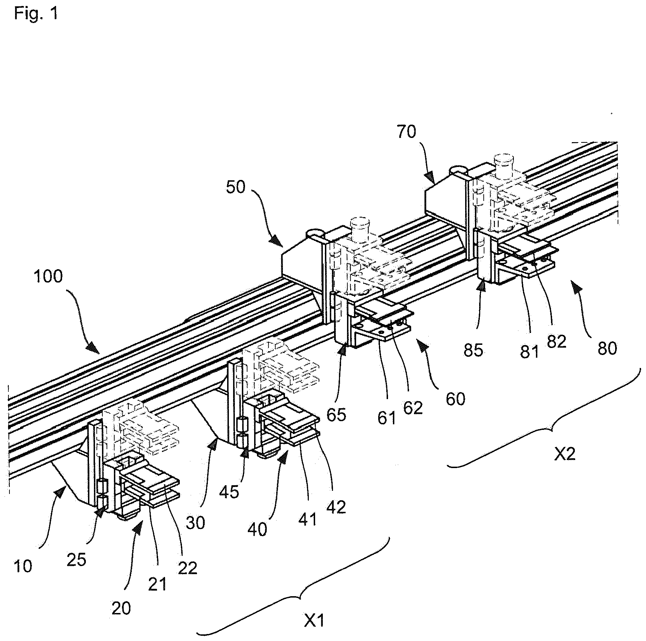

Fig. 1 zeigt eine perspektivische Ansicht eines Führungsträgers 100, der sich in einer Längsrichtung erstreckt. Beispielsweise kann der Führungsträger 100 ausgehend von einer Beschickungsstation zu einer Bearbeitungsstation verlaufen, sodass Werkstücke zwischen diesen Stationen bewegt werden können.

Der Führungsträger 100 weist an einer in vertikaler Richtung oberen Seite ein erstes Führungselement 110 und an einer in vertikaler Richtung unteren Seite ein zweites Führungselement 120 auf. Ferner ist an einem in horizontaler Richtung seitlichen Bereich ein drittes Führungselement 130 angeordnet. Das erste Führungselement 110, das zweite Führungselement 120 und das dritte Führungselement 130 erstrecken sich entlang der Längsrichtung des Führungsträgers 100.

Anhand des zweiten Führungselements 120 werden ein erster Führungsschlitten 10 sowie ein zweiter Führungsschlitten 30 geführt, und der erste Führungsschlitten 10 sowie der zweite Führungsschlitten 30 werden mittels eines ersten Abschnitts 130-1 des dritten Führungselements 130 abgestützt. Somit sind der erste Führungsschlitten 10 sowie der zweite Führungsschlitten 30 entlang der Längsrichtung des Führungsträgers 100 bewegbar.

Der erste Führungsschlitten 10, der zweite Führungsschlitten 30 sowie die jeweiligen daran vorgesehenen Komponenten werden als Halteanordnung X1 bezeichnet.

Mittels des ersten Führungselements 100 werden ein dritter Führungsschlitten 50 sowie ein vierter Führungsschlitten 70 entlang der Längsrichtung des Führungsträgers 100 geführt. Der dritte Führungsschlitten 50 sowie der vierte Führungsschlitten 70 werden an einem zweiten Abschnitt 130-2 des dritten Führungselements 130 abgestützt.

Der erste Abschnitt 130-1 und der zweite Abschnitt 130-2 des Führungselements 130 sind dabei so ausgebildet/angeordnet, dass, wie nachfolgend erläutert, ein aneinander Vorbeifahren der Führungsschlitten ermöglicht wird. Gemäß einer Modifikation ist es auch möglich, den ersten Abschnitt und den zweiten Abschnitt als getrennte Führungselemente auszubilden.

Der dritte Führungsschlitten 50, der vierte Führungsschlitten 70 sowie die jeweiligen daran vorgesehenen Komponenten werden als weitere Halteanordnung X2 bezeichnet.

Der erste Führungsschlitten 10 nimmt ein erstes Halteelement 20, der zweite Führungsschlitten 30 ein zweites Halteelement 40, der dritte Führungsschlitten 50 ein drittes Halteelement 60 sowie der vierte Führungsschlitten 70 ein viertes Halteelement 80 auf. Die Halteelemente 20, 40, 60 sowie 80 sind in vertikaler Richtung relativ zum jeweiligen Führungsschlitten bewegbar, um von einer Grundstellung in eine Arbeitsstellung zu gelangen, und umgekehrt.

Insbesondere ist am ersten Führungsschlitten 10 ein Ausstellschlitten 25 vorgesehen, der in vertikaler Richtung von einer Grundstellung in eine Arbeitsstellung verfahren werden kann (und umgekehrt). An diesem ersten Ausstellschlitten 25 ist das erste Halteelement 20 vorgesehen, das entsprechend der Bewegung des Ausstellschlittens 25 verfahren werden kann.

Am zweiten Führungsschlitten 30 ist ein zweiter Ausstellschlitten 45 vorgesehen, der ähnlich wie der erste Ausstellschlitten 25 in vertikaler Richtung bewegt werden kann und das zweite Halteelement 40 aufnimmt.

Am dritten Führungsschlitten 50 ist ein dritter Ausstellschlitten 65 vorgesehen, der ebenfalls in vertikaler Richtung von einer Grundstellung in eine Arbeitsstellung bewegt werden kann (und umgekehrt), um das daran angebrachte dritte Halteelement 60 in vertikaler Richtung zu bewegen.

Am vierten Führungsschlitten 70 ist ein vierter Ausstellschlitten 85 vorgesehen, der ähnlich wie die zuvor beschriebenen Ausstellschlitten in vertikaler Richtung von einer Grundstellung in eine Arbeitsstellung bewegt werden kann. Der vierte Ausstellschlitten 85 nimmt das vierte Halteelement 80 auf, und kann dieses entsprechend in einer vertikalen Richtung bewegen.

Der erste Führungsschlitten 10, der zweite Führschlitten 30 sowie die jeweils daran angebrachten Komponenten sind als Teil der Halteanordnung X1 eingerichtet, durch eine aufeinander abgestimmte Bewegung ein plattenförmiges Werkstück aufzunehmen, zu halten und dieses entlang des Führungsträgers zu bewegen.

Entsprechendes gilt für den dritten Führungsschlitten 50, den vierten Führungsschlitten 70 sowie die jeweils daran angebrachten Komponenten, die die weitere Halteanordnung X2 ausbilden.

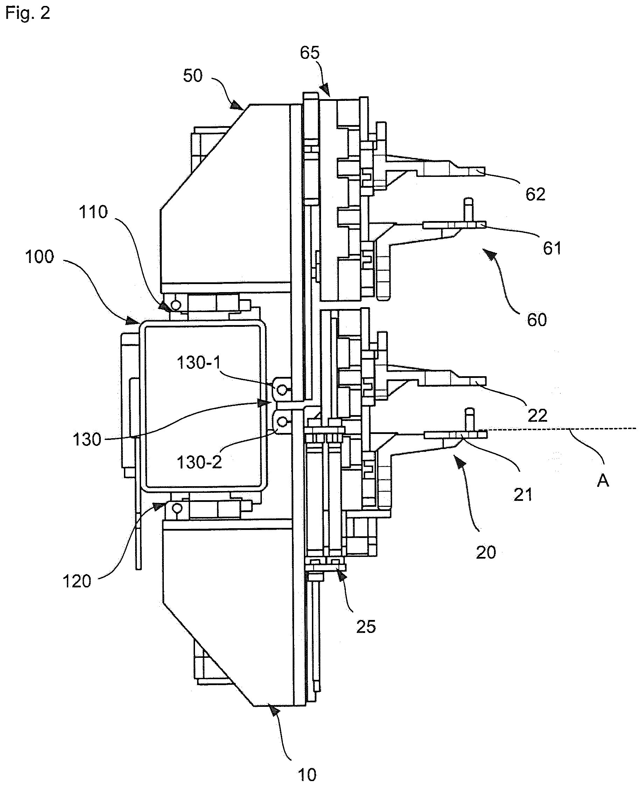

Anhand der Seitenansicht (Fig. 2) werden einzelne Elemente näher erläutert. Es ist jedoch ersichtlich, dass diese Erläuterungen auf die weiteren (in dieser Ansicht verdeckten) Elemente übertragen werden können.

Insbesondere umfasst das erste Halteelement 20 eine erste Greifeinheit 21 sowie eine zweite Greifeinheit 22, die relativ zueinander bewegt werden können, um ein Werkstück dazwischen zu klemmen. Entsprechend umfasst das zweite Halteelement 40 eine erste Greifeinheit 41 sowie eine zweite Greifeinheit 42.

Das dritte Halteelement 60 umfasst eine erste Greifeinheit 61 sowie eine zweite Greifeinheit 62, die jeweils relativ zueinander bewegt werden können, um ein Werkstück dazwischen zu klemmen. Ferner umfasst das vierte Halteelement 80 eine erste Greifeinheit 81 sowie eine zweite Greifeinheit 82.

In Fig. 2 befindet sich das erste Halteelement 20 in einer Arbeitsstellung, wohingegen das dritte Halteelement 60 in einer Grundstellung angeordnet ist. Durch die Arbeitsstellung des ersten Halteelements 20 (sowie des durch das erste Halteelement 20 verdeckten zweiten Halteelements 40) können die Greifeinheiten 41, 42 derart angeordnet werden, dass ein damit gehaltenes Werkstück mit den Greifeinheiten 21, 22 in einer Arbeitsebene angeordnet ist. Das dritte Halteelement 60 sowie das in der Ansicht in Fig. 2 durch das dritte Halteelement 60 verdeckte vierte Halteelement 80 hingegen befinden sich in einer Grundstellung, sodass das dritte Halteelement 60 und das vierte Halteelement 80 entlang des Führungsträgers 100 bewegt werden können, ohne mit dem ersten Halteelement 20 oder dem zweiten Halteelement 40 zu kollidieren.

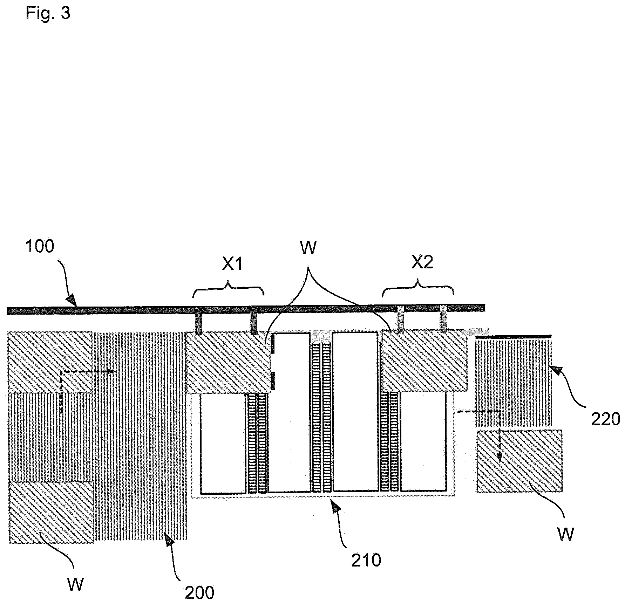

Fig. 3 zeigt eine Draufsicht einer Ausführungsform einer Bearbeitungsmaschine mit einer Fördereinrichtung gemäß der ersten Ausführungsform. Die Bearbeitungsmaschine umfasst eine Beschickungsstation 200, einen Bearbeitungsbereich 210 mit mehreren Bearbeitungsstation, eine Ausförderstation 220 sowie die Fördereinrichtung. Der Führungsträger 100 der Fördereinrichtung erstreckt sich hierbei zwischen der Beschickungsstation 200, dem Bearbeitungsbereich 210 mit den Bearbeitungsstationen und der Ausförderstation 220.

Entlang des Führungsträgers 100 sind die Halteanordnung X1 und die weitere Halteanordnung X2 verfahrbar angeordnet. Jede der Halteanordnungen X1, X2 nimmt ein Werkstück W auf, sodass Werkstücke ausgehend von der Beschickungsstation 200 zum Bearbeitungsbereich und nachfolgend zur Ausförderstation 220 bewegt werden. Sobald eine der Halteanordnungen das jeweils gehaltene Werkstück an der Ausförderstation 220 freigibt, werden die Halteelemente dieser Halteanordnung von der Arbeitsstellung in die Grundstellung bewegt, sodass die Halteanordnung entlang des Führungsträgers 100 zur Beschickungsstation 200 bewegt werden kann und dabei die jeweils andere Halteanordnung passiert.

Auch wenn in der dargestellten Ausführungsform eine Beschickungsstation 200 und eine Ausförderstation 220 vorgesehen sind, kann gemäß einer Modifikation anstelle der Beschickungsstation 200 eine kombinierte Beschickungs- und/Ausförderstation vorhanden sein. In diesem Fall kann die Ausförderstation 220 vorgesehen sein oder weggelassen werden.

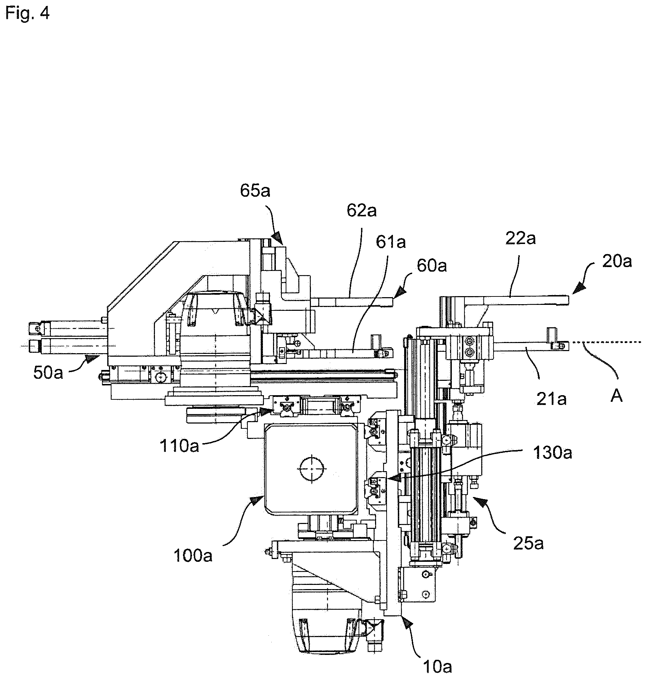

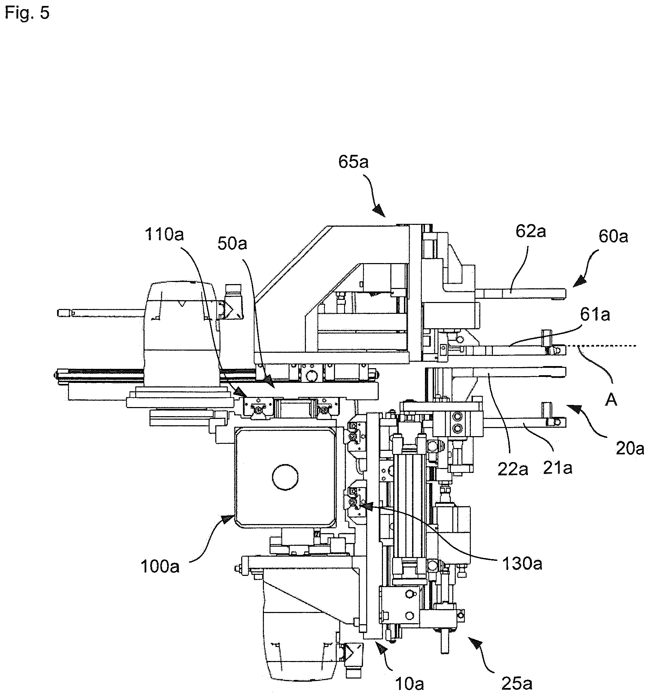

Anhand der in Fig. 4 und Fig. 5 dargestellten Seitenansicht soll eine zweite Ausführungsform erläutert werden.

Gemäß der zweiten Ausführungsform ist ein Führungsträger 100a vorgesehen, der sich ähnlich wie der Führungsträger 100 der ersten Ausführungsform in einer Längsrichtung erstreckt. Entlang des Führungsträgers 100a sind ein erstes Halteelement, ein zweites Halteelement, ein drittes Halteelement und ein viertes Halteelement bewegbar, wobei zur Veranschaulichung in Fig. 4 ähnlich wie in der Darstellung gemäß Figur 2 lediglich ein erstes Halteelement 20a sowie ein drittes Halteelement 60a dargestellt und nachfolgend erläutert werden.

Das erste Halteelement 20a umfasst eine erste Greifeinheit 21a sowie eine zweite Greifeinheit 22a, die relativ zueinander bewegt werden können, um ein Werkstück dazwischen zu klemmen. Entsprechendes gilt für das in Fig. 4 und Fig. 5 nicht dargestellte zweite Halteelement.

Das dritte Halteelement 60a umfasst eine erste Greifeinheit 61a sowie eine zweite Greifeinheit 62a, die jeweils relativ zueinander bewegt werden können, um ein Werkstück dazwischen zu klemmen. Entsprechendes gilt für das in Fig. 4 und Fig. 5 nicht dargestellte vierte Halteelement.

Der Führungsträger 100a weist ein erstes Führungselement 110a in einer in vertikaler Richtung oberen Seite des Führungsträgers 100a auf. Ferner ist an einer ersten Seite ein weiteres Führungselement 130a vorgesehen.

Entlang des weiteren Führungselements 130a sind ein erster Führungsschlitten 10a sowie ein zweiter Führungsschlitten (in Fig. 4/Fig. 5 verdeckt durch den ersten Führungsschlitten) bewegbar.

Entlang des ersten Führungselements 110a sind ein dritter Führungsschlitten 50a sowie ein vierter Führungsschlitten (in Fig. 4/Fig. 5 verdeckt durch den dritten Führungsschlitten) bewegbar.

Ein zweiter Ausstellschlitten 25a ist entlang des ersten Führungsschlittens 10a in vertikaler Richtung bewegbar, sodass das erste Halteelement 20a in vertikaler Richtung von einer Ruhestellung in eine Arbeitsstellung bewegt werden kann. In der Arbeitsstellung des ersten Halteelements 20a (in Fig. 4 dargestellt) kann mittels des ersten Halteelements 20a ein Werkstück in einer Arbeitsebene A aufgenommen werden.

Das dritte Halteelement 60a umfasst eine erste Greifeinheit 61a sowie eine zweite Greifeinheit 62a, wobei die erste Greifeinheit 61a in vertikaler Richtung relativ zur zweiten Greifeinheit 62a bewegt werden kann, um ein Werkstück zu klemmen.

Entlang des dritten Führungsschlittens 50a ist ein dritter Ausstellschlitten 65a in horizontaler Richtung bewegbar, um ein drittes Halteelement 60a von einer Grundstellung in eine Arbeitsstellung zu bewegen. In Fig. 4 befindet sich das dritte Halteelement 60a in einer Grundstellung. Somit kann das dritte Halteelement 60a sowie das (nicht dargestellte) vierte Halteelement entlang des Führungsträgers 100 bewegt werden, ohne mit dem sich in der Arbeitsstellung befindlichen zweiten Halteelement 40a und dem ersten Halteelement (nicht dargestellt) zu kollidieren.

Fig. 5 ist eine Darstellung der zweiten Ausführungsform, bei der sich das dritte Halteelement 60a in der Arbeitsstellung befindet, wohingegen das erste Halteelement 20a in eine Grundstellung verfahren wurde.

Das dritte Halteelement 60a ist in der Arbeitsstellung derart angeordnet, dass ein Werkstück in der Arbeitsebene A gehalten werden kann. Das erste Halteelement 20a hingegen ist in der Grundstellung so angeordnet, dass dieses nicht mit dem dritten Halteelement 60a kollidiert.

Eine Bearbeitungsmaschine mit der Fördereinrichtung gemäß der zweiten Ausführungsform kann gleich oder ähnlich derjenigen ausgebildet sein, die bereits mit Bezug auf Fig. 3 erläutert wurde. Demnach wird hierauf verwiesen.

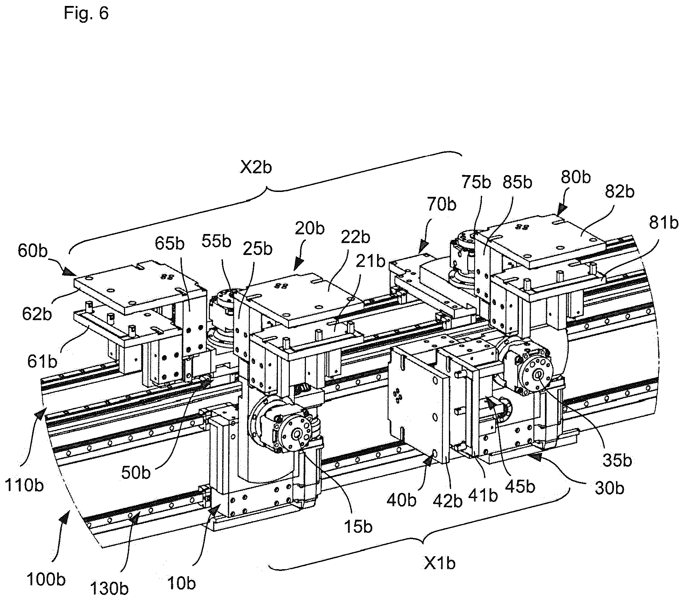

Fig. 6 zeigt eine perspektivische Darstellung der dritten Ausführungsform. Gemäß der dritten Ausführungsform ist ein Führungsträgers 100b vorgesehen, der sich in einer Längsrichtung erstreckt und beispielsweise von einer Beschickungsstation zu einer Bearbeitungsstation verläuft.

Fig. 6 zeigt eine perspektivische Ansicht eines Führungsträgers 100b, der sich in einer Längsrichtung erstreckt. Beispielsweise kann der Führungsträger 100b ausgehend von einer Beschickungsstation zu einer Bearbeitungsstation verlaufen, sodass Werkstücke zwischen diesen Stationen bewegt werden können.

Der Führungsträger 100b weist an einer in vertikaler Richtung oberen Seite ein Führungselement 110b und an einer in horizontaler Richtung seitlichen Seite ein weiteres Führungselement 130b auf.

Gemäß der dritten Ausführungsform werden am Führungsträger 100b ein erster Führungsschlitten 10b, ein zweiter Führungsschlitten 30b sowie die jeweiligen daran vorgesehenen Komponenten vorgesehen. Der erste Führungsschlitten 10b, der zweite Führungsschlitten 30b sowie die jeweiligen daran vorgesehenen Komponenten werden als Halteanordnung X1b bezeichnet.

Ferner sind ein dritter Führungsschlitten 50b sowie ein vierter Führungsschlitten 70b entlang der Längsrichtung des Führungsträgers 100b bewegbar. Der dritte Führungsschlitten 50b, der vierte Führungsschlitten 70b sowie die jeweiligen daran vorgesehenen Komponenten werden als weitere Halteanordnung X2b bezeichnet.

Anhand des Führungselement 110b werden der erste Führungsschlitten 10b sowie der zweite Führungsschlitten 30b geführt, und anhand des weiteren Führungselements 130b der dritte Führungsschlitten 50b und der vierte Führungsschlitten 70b.

Der erste Führungsschlitten 10b nimmt ein erstes Halteelement 20b, der zweite Führungsschlitten 30b ein zweites Halteelement 40b, der dritte Führungsschlitten 50b ein drittes Halteelement 60b sowie der vierte Führungsschlitten 70b ein viertes Halteelement 80b auf.

Das erste Halteelement 20b ist um eine erste, horizontal ausgerichtete Achse 15b schwenkbar mit dem ersten Führungsschlitten 10b verbunden und das zweite Halteelement 40b ist um eine zweite, horizontal ausgerichtete Achse 35b schwenkbar mit dem zweiten Führungsschlitten 30b verbunden.

Das dritte Halteelement 60b ist um eine dritte, vertikal ausgerichtete Achse 55b schwenkbar mit dem dritten Führungsschlitten 50b verbunden und das vierte Halteelement 80b ist um eine vierte, vertikal ausgerichtete Achse 75b schwenkbar mit dem vierten Führungsschlitten 75b verbunden.

Die Halteelemente 20b, 40b, 60b sowie 80b können somit um eine jeweilige Achse geschwenkt werden, um von einer Grundstellung in eine Arbeitsstellung zu gelangen, und umgekehrt.

Ferner ist am ersten Führungsschlitten 10b ein Ausstellschlitten 25b vorgesehen. An diesem ersten Ausstellschlitten 25b ist das erste Halteelement 20b vorgesehen, das entsprechend der Bewegung des Ausstellschlittens 25b geschwenkt werden kann.

Am zweiten Führungsschlitten 30b ist ein zweiter Ausstellschlitten 45b vorgesehen, der ähnlich wie der erste Ausstellschlitten 25b geschwenkt werden kann und das zweite Halteelement 40b aufnimmt.

Am dritten Führungsschlitten 50b ist ein dritter Ausstellschlitten 65b vorgesehen, der ebenfalls von einer Grundstellung in eine Arbeitsstellung geschwenkt werden kann (und umgekehrt), um das daran angebrachte dritte Halteelement 60b um die vertikal ausgerichtete Achse 55b zu drehen.

Am vierten Führungsschlitten 70b ist ein vierter Ausstellschlitten 85b vorgesehen, der ähnlich wie die zuvor beschriebenen Ausstellschlitten von einer Grundstellung in eine Arbeitsstellung gedreht werden kann. Der vierte Ausstellschlitten 85b nimmt das vierte Halteelement 80b auf.

Der erste Führungsschlitten 10b, der zweite Führschlitten 30b sowie die jeweils daran angebrachten Komponenten sind als Teil der Halteanordnung X1b eingerichtet, durch eine aufeinander abgestimmte Bewegung ein plattenförmiges Werkstück aufzunehmen, zu halten und dieses entlang des Führungsträgers zu bewegen. Entsprechendes gilt für den dritten Führungsschlitten 50b, den vierten Führungsschlitten 70b sowie die jeweils daran angebrachten Komponenten, die die weitere Halteanordnung X2b ausbilden.

Das erste Halteelement 20b umfasst eine erste Greifeinheit 21b sowie eine zweite Greifeinheit 22b, die relativ zueinander bewegt werden können, um ein Werkstück dazwischen zu klemmen. Entsprechend umfasst das zweite Halteelement 40b eine erste Greifeinheit 41b sowie eine zweite Greifeinheit 42b.

Das dritte Halteelement 60b umfasst eine erste Greifeinheit 61b sowie eine zweite Greifeinheit 62b, die jeweils relativ zueinander bewegt werden können, um ein Werkstück dazwischen zu klemmen. Ferner umfasst das vierte Halteelement 80b eine erste Greifeinheit 81b sowie eine zweite Greifeinheit 82b.

In Fig. 6 befindet sich zur Veranschaulichung das erste Halteelement 20b in einer Arbeitsstellung, wohingegen das zweite Halteelement 40b in einer Grundstellung befindlich ist. Ferner ist das dritte Halteelement 60b in einer Grundstellung, wohingegen vierte Halteelement 80b in einer Arbeitsstellung befindlich ist. Anhand dieser Darstellung ist anschaulich erkennbar, dass das erste Halteelement 20b und das dritte Halteelement 60b aneinander vorbei bewegt werden können. Entsprechendes gilt für das zweite Halteelement 40b sowie das vierte Halteelement 80b.

Um die Halteelemente im Betrieb aneinander vorbei führen zu können, werden das erste Halteelement 20b und das zweite Halteelement 40b in der jeweiligen Grundstellung oder Arbeitsstellung befindlich sein, wohingegen das dritte Halteelement 60b und das vierte Halteelement 80b in der jeweils anderen Stellung (Arbeitsstellung oder Grundstellung) befindlich sein werden, oder umgekehrt.

Es ist für den Fachmann ersichtlich, dass einzelne, jeweils in verschiedenen Ausführungsformen beschriebene Merkmale auch in einer einzigen Ausführungsform umgesetzt werden können, sofern sie nicht strukturell inkompatibel sind. Gleichermaßen können verschiedene Merkmale, die im Rahmen einer einzelnen Ausführungsform beschrieben sind, auch in mehreren Ausführungsformen einzeln oder in jeder geeigneten Unterkombination vorgesehen sein.

## Patentansprüche

1. Fördereinrichtung, umfassend
einen Führungsträger (100, 100a, 100b), der sich in einer Längsrichtung erstreckt,
eine Halteanordnung (X1, X1b), die entlang des Führungsträgers (100, 100a, 100b) bewegbar ist und ein Halteelement (20, 20a, 20b; 40, 40a, 40b) aufweist, wobei das Halteelement (20, 20a, 20b; 40, 40a, 40b) zwischen einer Grundstellung und einer Arbeitsstellung bewegbar ist, und
eine weitere Halteanordnung (X2, X2b), die entlang des Führungsträgers (100, 100a, 100b) bewegbar ist und ein weiteres Halteelement (60, 60a, 60b; 80, 80a, 80b) aufweist,
wobei die Grundstellung derart ist, dass die Halteanordnung (X1, X1b) und die weitere Halteanordnung (X2, X2b) entlang des Führungsträgers (100, 100a, 100b) relativ aneinander vorbei bewegbar sind.

2. Fördereinrichtung gemäß Anspruch 1, wobei das weitere Halteelement (60, 60a, 60b; 80, 80a, 80b) zwischen einer Grundstellung und einer Arbeitsstellung bewegbar ist.

3. Fördereinrichtung gemäß einem der vorangegangenen Ansprüche, wobei die Halteanordnung (X1, X1b) ein erstes Halteelement (20, 20a, 20b) und ein zweites Halteelement (40, 40a, 40b) aufweist, und/oder die weitere Halteanordnung (X2, X2b) ein drittes Halteelement (60, 60a, 60b) und ein viertes Halteelement (80, 80a, 80b) aufweist.

4. Fördereinrichtung gemäß einem der vorangegangenen Ansprüche, wobei die Halteelemente jeweils eine erste Greifeinheit (21, 21a 21b; 41, 41a, 41b; 61, 61a, 61b; 81, 81a, 81b) sowie eine zweite Greifeinheit (22, 22a, 22b; 42, 42a, 42b; 62, 62a, 62b; 82, 82a, 82b) aufweisen, wobei die erste Greifeinheit (21, 21a 21b; 41, 41a, 41b; 61, 61a, 61b; 81, 81a, 81b) in vertikaler Richtung relativ zur zweiten Greifeinheit (22, 22a, 22b; 42, 42a, 42b; 62, 62a, 62b; 82, 82a, 82b) bewegbar ist, und/oder die zweite Greifeinheit (22, 22a, 22b; 42, 42a, 42b; 62, 62a, 62b; 82, 82a, 82b) in vertikaler Richtung relativ zur ersten Greifeinheit (21, 21a 21b; 41, 41a, 41b; 61, 61a, 61b; 81, 81a, 81b) bewegbar ist.

5. Fördereinrichtung gemäß einem der vorangegangenen Ansprüche, wobei das Halteelement (20, 20a, 20b; 40, 40a, 40b) und das weitere Halteelement (60, 60a, 60b; 80, 80a, 80b) in einer Arbeitsstellung derart angeordnet sind, dass ein oder mehrere Werkstücke in einer Arbeitsebene (A) gehalten werden können.

6. Fördereinrichtung gemäß einem der vorangegangenen Ansprüche, wobei das Halteelement (20, 20a; 40, 40a) und/oder das weitere Halteelement (60, 60a; 80, 80a) in einer vertikalen Richtung zwischen der Grundstellung und der Arbeitsstellung bewegbar sind.

7. Fördereinrichtung gemäß einem der vorangegangenen Ansprüche, wobei das Halteelement (20b; 40b) und/oder das weitere Halteelement (60b; 80b) zwischen der Grundstellung und der Arbeitsstellung schwenkbar sind.

8. Fördereinrichtung gemäß einem der vorangegangenen Ansprüche, wobei der Führungsträger (100, 100a, 100b) ein Führungselement (110, 110a, 110b), insbesondere an einer in vertikaler Richtung oberen Seite, und ein Führungselement (120; 130, 130a, 130b), insbesondere an einer in vertikaler Richtung unteren Seite oder in horizontaler Richtung seitlichen Seite, aufweist.

9. Fördereinrichtung gemäß einem der vorangegangenen Ansprüche, wobei das Halteelement (20, 20a, 20b; 40, 40a, 40b) und/oder das weitere Halteelement (60, 60a, 60b; 80, 80a, 80b) pneumatisch oder motorisch zwischen einer Grundstellung und einer Arbeitsstellung bewegbar ist/sind.

10. Bearbeitungsmaschine, umfassend eine Beschickungsstation (200), eine Bearbeitungsstation (210), eine Ausförderstation (220) sowie eine Fördereinrichtung gemäß einem der vorangegangenen Ansprüche, wobei sich der Führungsträger (100, 100a, 100b) zwischen der Beschickungsstation, der Bearbeitungsstation (210) und/oder der Ausförderstation (220) erstreckt.

11. Bearbeitungsmaschine gemäß Anspruch 10, wobei sich der Führungsträger (100, 100a, 100b) über die Beschickungsstation (200) und der Ausförderstation (220) hinaus erstreckt.

12. Verfahren zum Fördern zumindest eines, insbesondere plattenförmigen, Werkstücks mit einer Fördereinrichtung,
wobei die Fördereinrichtung einen Führungsträger (100, 100a, 100b), der sich in einer Längsrichtung erstreckt, eine Halteanordnung (X1, X1b), die entlang des Führungsträgers (100, 100a, 100b) bewegbar ist und ein Halteelement (20, 20a, 20b; 40, 40a, 40b) aufweist, sowie eine weitere Halteanordnung (X2, X2b) aufweist, die entlang des Führungsträgers (100, 100a, 100b) bewegbar ist und ein weiteres Halteelement (60, 60a, 60b; 80, 80a, 80b) aufweist,
wobei das Halteelement (20, 20a, 20b; 40, 40a, 40b) von einer Arbeitsstellung in eine Grundstellung bewegt wird, und
die Halteanordnung (X1, X1b) und die weitere Halteanordnung (X2, X2b) nachfolgend entlang des Führungsträgers (100, 100a, 100b) relativ aneinander vorbei bewegt werden.

13. Verfahren gemäß Anspruch 12, wobei das weitere Halteelement (60, 60a, 60b; 80, 80a, 80b) zwischen einer Grundstellung und einer Arbeitsstellung bewegt wird.

14. Verfahren gemäß Anspruch 13, wobei das Halteelement (20, 20a; 40, 40a) und/oder das weitere Halteelement (60, 60a; 80, 80a) in einer vertikalen Richtung zwischen der Grundstellung und der Arbeitsstellung bewegt werden, oder das Halteelement (20b; 40b) und/oder das weitere Halteelement (60b; 80b) zwischen der Grundstellung und der Arbeitsstellung geschwenkt werden.
